# EUROPEAN PATENT SPECIFICATION

(11) **EP 1 031 290 B1**
(45) Date of publication and mention of the grant of the patent: **28.01.2004**
(21) Application number: 00103656.5
(22) Date of filing: 21.02.2000
(51) Int. Cl.: A23N 15/00

(54) **Automatic device for slicing cooked artichoke hearts**
Selbsttätige Einrichtung zum Aufschneiden von gekochten Artischockenherzen
Appareil automatique pour trancher des coeurs d'artichauts

(30) Priority: 26.02.1999 IT VR990022
(43) Date of publication of application: 30.08.2000
(73) Proprietor: Tomelleri, Tiziana, I-37131 Verona (IT)
(72) Inventor: Tomelleri, Tiziana, I-37131 Verona (IT)
(74) Representative: Petraz, Gilberto Luigi

(56) References cited:
- IT-B- 1 117 844
- IT-B- 1 147 522
- US-A- 5 168 801

## Description

The present invention relates to an automatic device for slicing cooked artichoke hearts.

More particularly, the present invention relates to a device housed within an automatic machine for working artichokes in order to obtain their hearts or cores, said device being suitable for automatically slicing these artichoke hearts, as peeled by said machine.

The invention may be mainly applied in the field of foodstuffs preparing, transforming and preserving industry.

### BACKGROUND ART

According to a known process for obtaining artichoke hearts, a small to medium sized artichoke (i.e. having a diameter up to about 90 mm) undergoes various working steps in a semi-automatic machine, its is progressively peeled and turned until its heart is obtained, which is then discharged into a discharging station.

This process and this machine are described in detail in italian patent n. 1.117.844, which constitutes the prior art underlying the present invention; the reader may refer to this document for a detailed description concerning how an artichoke is firstly clamped and then conveyed towards the different working stations.
The process according to italian patent n. 1.117.844 is carried out by means of a semi-automatic machine having an intermittent reciprocating movement, in which the artichokes are firstly manually set between the jaws of a clamping device which firmly clamps each artichoke.

At the same time, the stem is placed into a bore of a positioning plate which is arranged under the jaws and which is movable together with said jaws according to a horizontal direction.

The artichoke is then horizontally translated by means of a gear provided with chains and crowns towards a first working station, in which the stem is shortened, a second working station, in which the leaves associated to the remaining stem portion are cut away and the artichoke is placed at a predetermined height, a third station in which the stem is cut away in correspondence of the artichoke bottom, a fourth station in which the artichoke is deeply turned to obtain its central portion or heart, and in which the artichoke is topped, and a fifth, final station, in which the artichoke heart is discharged.

In correspondence of the discharging station there is a device as described in italian patent No. 1147522, and a reader may refer to this patent for a detailed description thereof; this device allows a final turning of the artichoke's external surface to be carried out, as well as its simultaneous discharging from the clamping jaws.

This device generally comprises a hollow cylinder rotating about its longitudinal axis, placed beneath the conveyor on which the artichoke is placed; the upper edge of said cylinder is provided with one or more blades which, in operation, finally mill the artichoke heart's external surface, as kept by the jaws of the conveyor.

Furthermore, the rotating cylinder is also provided with a translating movement along its longitudinal axis, in order to respectively approach the rotating blades to or remove them from the artichoke.

During the raising movement of the rotating cylinder towards the artichoke, a plug acts simultaneously on the artichoke top in order to push it out of the jaws towards the inner part of the rotating cylinder; as a consequence, once the artichoke is free from the jaws, it drops inside of the cylinder, it comes out at the opposed end thereof, and it finally drops on the screw feeder of a conveyor for discharging the artichoke heart or core.

Such automatic machine is efficient and allows a high production of turned and cleaned artichokes to be achieved; moreover, it can be provided with a further device that is constituted by some blades fixed to a sleeve placed inside of the rotating cylinder, whereby said device allows the artichoke to be cut into slices while the plug pushes the artichoke in order to release it from the jaws.

A device of this kind is described in italian utility model No. 63205U/90.

The previously described automatic machine is normally used for working raw artichokes.

It has shown as being also perfectly working on at least partially cooked artichokes, except for the last slicing operation.

In fact, it has been noted that the fixed blades cannot carry out a reliable cut of a cooked artichoke heart which, once it undergoes a thrust action towards the blades by means of the plug, is often flaked off, or even destroyed, thereby causing high product losses.

### DESCRIPTION OF THE INVENTION

The present invention aims to set aside the inconveniences and drawbacks of the background art, and to provide, thus, for an automatic device to be assembled within a machine for working artichokes, said device being able to slice previously cooked artichoke hearts or cores.

This is achieved by means of a device having the features disclosed in the main claim.

Dependent claims outline particularly advantageous forms of embodiment of the invention.

The automatic device for slicing cooked artichoke hearts according to the present invention is placed in proximity of the discharging station, just beneath the pushing and expelling plug and the rotating cylinder for the final turning operation of the external part of the artichoke heart.

Such device comprises a hollow cylindrical container inside of which there is a rod whose pointed tip protrudes inside of the turning cylinder, just beneath the jaws holding the artichoke heart; consequently, the artichoke expelled by the plug is immediately transfixed by said rod.

The side surface of said cylindrical container comprises a series of rectilinear openings, parallel to the longitudinal axis of said container, which are crossed by respective rotating discs provided with blades suitable for slicing the cooked artichoke hearts that are present on the rod; the rotating movement of said rotating discs is coordinated and simultaneous, controlled by a single motor.

### ILLUSTRATION OF DRAWINGS

Other features and advantages of the invention will become apparent by reading the following description of a form of embodiment of the invention, given as a non-limiting example and with the help of the figures illustrated in the annexed drawing, in which:
fig. 1 shows a schematical, partially sectioned, side view of the discharging area of an automatic machine for preparing artichoke hearts, as provided with a device for slicing cooked artichoke hearts according to the present invention; and
fig. 2 shows a schematical plan view of the main components of the device according to the present invention.

### DESCRIPTION OF A FORM OF EMBODIMENT

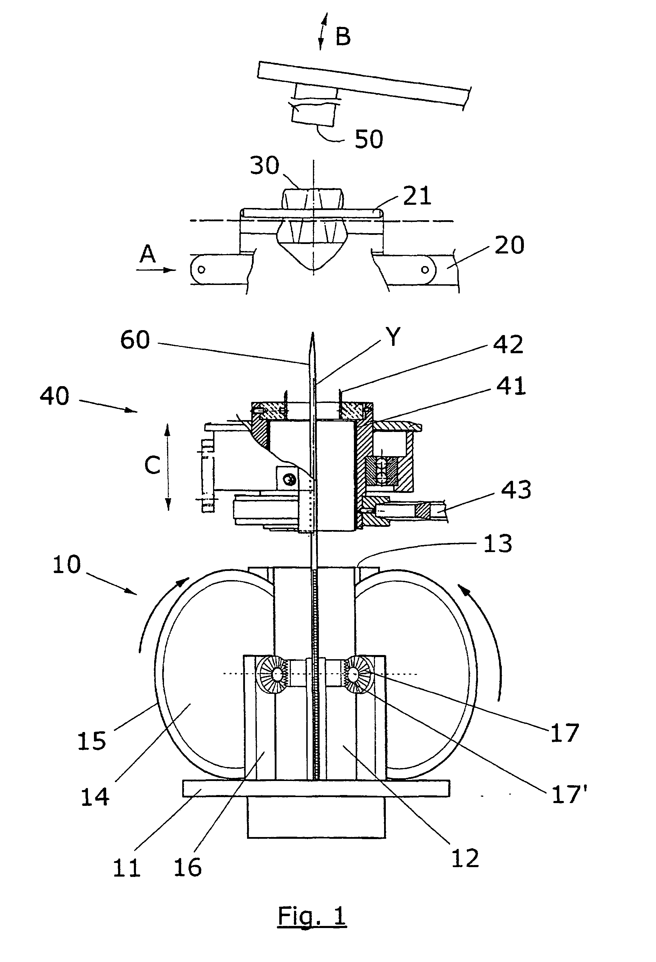

In figure 1, reference sign 10 generally indicates a device for slicing artichoke hearts or cores, particularly but not exclusively cooked artichoke hearts or cores, according to the present invention.

Device 10 is assembled in correspondence of the discharging area of an automatic machine for preparing artichoke hearts as described in italian patent No. 1117844, which is not considered as an integral part of the present invention.

For the purposes of the present invention it may suffice to note that said automatic machine is provided with a conveyor 20 having an intermittent motion, that carries some jaws 21 for firmly holding an artichoke 30 which undergoes, during its advancing movement (see arrow A in fig. 1) on conveyor 20, several operations such as peeling, cutting and milling in order to obtain its heart or core.

When an artichoke stops within the discharging station, it is further worked by a device 40 for milling the artichoke's external portion, as well as by a plug 50 that carries out a reciprocating movement indicated by arrow B and which exerts on the artichoke's top a thrust causing it to be released from jaws 21.

Milling device 40, which comprises a cylinder 41 rotating about a longitudinal axis Y and is provided with milling blades 42, is rotatably driven by a belt 43 connected to suitable driving means (not shown in the figures).

Furthermore, said device 40 is fixed to a frame (not shown in the figures) which is movable in a vertical direction with a translation reciprocating movement (see arrow C) in such a way that the rotating blades 42 approach the artichoke's body when the latter is still being clamped between jaws 21, in order to mill it.

Device 40 and plug 41 are the object of italian patent No. 1147522, to which the reader may refer for more constructive details.

Device 10 according to the present invention, which is placed beneath milling device 40, comprises a base 11 fixed to the frame of the machine for preparing artichoke hearts.

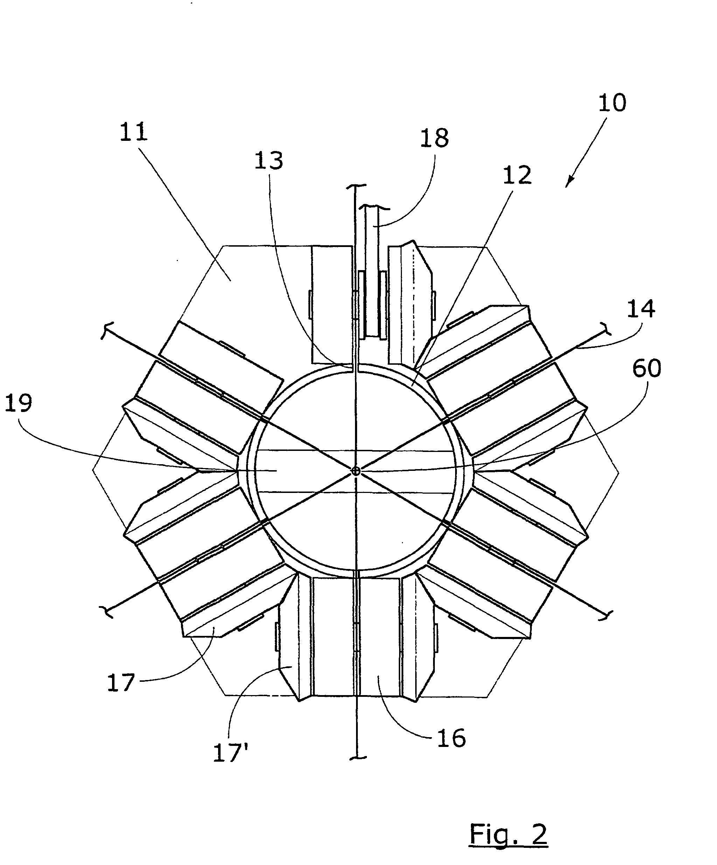

A hollow cyilindrical container 12 (see fig. 2 too) is fixed to base 11; the external surface of said container 12 is provided with a series of rectilinear slots 13 (six slots according to this form of embodiment) allowing the passage of respective discs 14 provided with cutting blades 15.

Each disc 14 is centrally borne, about its respective rotation axis, by at least one support 16 fixed to base 11; furthermore, discs 14 are mutually interconnected by means of suitable crown wheels and pinions 17, 17', in such a way that the rotation movement received by a disc through a belt 18 connected to suitable driving means (not shown in the figures) simultaneously rotatably drives all discs 14.

Supporting base 11 is bored in correspondence of cylindrical container 12, and is provided with a supporting element 19 for a rigid rod 60 that is coaxial with the longitudinal axis of container 12; the tip of said rod is pointed and protrudes inside of cylinder 41 of milling device 40 in such a way as to be placed in close proximity of and beneath the bottom of artichoke heart 30.

In operation, when an artichoke 30 stops at the discharging station, plug 50 exerts a thrust on its top, thereby causing its release from jaws 21.

Simultaneously, device 40 is raised and blades 42 carry out the final milling operation of the external portion of the artichoke heart 30, which is then transfixed by rod 60.

Conveyor 20 is then made to advance by one position in order to work the subsequent artichoke, what is carried out in the same previously described way; this subsequent artichoke is transfixed by rod 60 too, and pushes downwards the preceding and lower artichoke.

These operations are continuously repeated while the machine is working, until the lowest artichoke gets in touch with blades 15 of rotating discs 14.

The artichoke heart 30 is then cut into slices (six slices according to this form of embodiment), which drop inside of cylindrical container 11 and arrive on the screw feeder (not shown in the figures) of a discharging conveyor for the final removal of said slices for further operations or for their direct packaging.

It may be noted that the device according to the invention allows previously cooked artichokes to be sliced, and this operation is impossible by means of the automatic machines known in the art.

The invention has previously been described with reference to a particularly advantageous form of embodiment thereof.

However, the invention comprises several different forms of embodiment, falling within its scopes, in the range of mechanical equivalences.

By way of example, the number of slices (and, thus, of rotating blades) may be selected in accordance with the most difference working requirements; accordingly, the invention comprises forms of embodiment according to which a cooked artichoke heart is sliced into eight different portions.

## Claims

1. Automatic device (10) for slicing artichoke hearts or cores (30), said device being intended to be assembled inside of a machine for the preparation of artichoke hearts starting from entire artichokes, said machine being provided with a conveyor (20) having an intermittent movement and comprising jaws (21) for holding individual artichokes, as well as an automatic device (40) for milling the external portion of an artichoke heart, and an automatic device (50) for expelling the artichoke heart frome the holding jaws (21) towards a harvesting device, said slicing device (10) being **characterised in that** it comprises a fixed rod (60) upon which an artichoke heart or core (30) is transfixed when it is expelled from said jaws (21), as well as a series of, rotatable circular blades (14) which are radially disposed around said rod (60) and which are simultaneously rotatable in order to cut the artichoke heart as transfixed by said rod into slices, said device (10) being intended to be assembled beneath said automatic device (40) for milling the artichoke heart.

2. Device (10) according to claim 1, **characterised in that** it comprises a supporting base (11) fixed to the framework of said automatic machine, as well as a hollow cylindrical container (12) that is fixed to said base (11) and that is provided with a series of slots which are parallel to its longitudinal axis (Y) in order to allow the insertion therein of said rotatable circular blades (14).

3. Device according to anyone of the preceding claims, **characterised in that** said rotatable circular blades (14) are borne by said base (11), are motorised and are mutually interconnected by means of crown wheels and pinions (17, 17').

4. Device according to anyone of the preceding claims, **characterised in that** said rod (60) is fixed to said supporting base (11).

## Patentansprüche

1. Automatische Vorrichtung (10) zum Schneiden von Artischockenherzen oder -kernen (30), wobei die Vorrichtung in das Innere einer Maschine zur Herstellung von Artischockenherzen aus vollständigen Artischocken montierbar ist, wobei die Maschine mit einem Förderer (20) mit periodischer Bewegung versehen ist und Klauen (21) zum Halten individueller Artischocken sowie eine automatische Vorrichtung (40) zum Fräsen eines äußeren Abschnitts eines Artischockenherzes und eine automatische Vorrichtung (50) zum Ausstoßen des Artischockenherzes aus den Halteklauen (21) in eine Sammelvorrichtung umfasst, wobei die Schneidvorrichtung (10) **dadurch gekennzeichnet ist, dass** sie eine feste Stange (60), auf welcher ein Artischockenherz oder -kern (30) aufgespießt wird, wenn er von den Klauen (21) ausgestoßen wird, sowie eine Abfolge rotierbarer kreisförmiger Klingen (40) umfasst, welche radial um die Stange (60) angeordnet und welche gleichzeitig drehbar sind, um das auf der Stange aufgespießte Artischockenherz in Scheiben zu schneiden, wobei die Vorrichtung (10) neben einer automatischen Vorrichtung (40) zum Fräsen des Artischockenherzes montierbar ist.

2. Vorrichtung (10) nach Anspruch 1, **dadurch gekennzeichnet, dass** sie eine am Rahmen der automatischen Maschine befestigte Trägerplatte (11) sowie einen hohlen zylindrischen Behälter umfasst, der an der Platte (11) befestigt und der mit einer Abfolge parallel zu seiner Längsachse (y) verlaufender Schlitze versehen ist, um darin ein Einsetzen der rotierbaren kreisförmigen Klingen (14) zu ermöglichen.

3. Vorrichtung nach einem der vorhergehenden Ansprüche, **dadurch gekennzeichnet, dass** die rotierbaren kreisförmigen Klingen (40) an der Platte (11) aufgenommen, mit einem Motor antreibbar und miteinander mittels Kronenrädern und Zahnrädern (17, 17') verbunden sind.

4. Vorrichtung nach einem der vorhergehenden Ansprüche, **dadurch gekennzeichnet, dass** die Stange (60) an der Trägerplatte (11) befestigt ist.

## Revendications

1. Dispositif automatique (10) pour découper des coeurs d'artichaut (30), ledit dispositif étant prévu pour être assemblé à l'intérieur d'une machine pour la préparation de coeurs d'artichaut en commençant par des artichauts entiers, ladite machine étant pourvue d'un convoyeur (20) ayant un mouvement intermittent et comprenant des mâchoires (21) pour retenir des artichauts individuels, de même qu'un dispositif automatique (40) pour broyer la partie externe d'un coeur d'artichaut, et un dispositif automatique (50) pour expulser le coeur d'artichaut des mâchoires de retenue (21) vers un dispositif de récolte, ledit dispositif de découpe (10) étant **caractérisé en ce qu'**il comprend une tige fixe (60) sur laquelle un coeur d'artichaut (30) est transpercé lors de son expulsion desdites mâchoires (21), de même qu'une série de lames circulaires rotatives (14) qui sont disposées radialement autour de ladite tige (60) et qui sont rotatives simultanément pour découper en tranches le coeur d'artichaut transpercé par ladite tige, ledit dispositif (10) étant prévu pour montage au-dessous dudit dispositif automatique (40) pour broyer le coeur d'artichaut.

2. Dispositif (10) selon la revendication 1, **caractérisé en ce qu'**il comprend un socle support (11) fixée au cadre de ladite machine automatique, de même qu'un conteneur cylindrique creux (12) qui est fixé audit socle (11) et qui est doté d'une série de fentes qui sont parallèles à son axe longitudinal (Y) pour permettre l'introduction dans ce dernier, desdites lames circulaires rotatives (14).

3. Dispositif selon l'une quelconque des revendications précédentes, **caractérisé en que** lesdites lames circulaires rotatives (14) sont supportées par ledit socle (11), qu'elles sont motorisées et connectées les unes aux autres à l'aide de roues de rencontre et de pignons (17, 17').

4. Dispositif selon l'une quelconque des revendications précédentes, **caractérisé en ce que** ladite tige (60) est fixée audit socle support (11).
